# EUROPEAN PATENT SPECIFICATION

(11) **EP 0 407 498 B1**
(45) Date of publication and mention of the grant of the patent: **04.05.1994**
(21) Application number: 89912184.2
(22) Date of filing: 27.10.1989
(51) Int. Cl.: A23G 3/30

(54) **EMULSIFIERS FOR FLAVOR PROLONGATION IN CHEWING GUM**
EMULGIERMITTEL ZUR VERLÄNGERUNG DES GESCHMACKS BEI KAUGUMMI
EMULSIFIANTS DE PROLONGATION DU GOUT DE CHEWING GUM

(30) Priority: 04.11.1988 US 267540
(43) Date of publication of application: 16.01.1991
(73) Proprietor: WM. WRIGLEY JR. COMPANY, Chicago Illinois 60611 (US)
(72) Inventor: CHAPDELAINE, Albert, H., Naperville, IL 60565 (US); BARRETT, Kevin, F., Darien, IL 60559 (US); REED, Michael, A., Evanston, IL 60202 (US)
(74) Representative: Allard, Susan Joyce
(86) International application number: US8904834
(87) International publication number: WO9004926

(56) References cited:
- EP-A- 0 273 009
- JP-A- 5 847 480
- US-A- 3 930 026
- US-A- 4 157 402
- US-A- 4 233 288
- US-A- 4 378 374
- US-A- 4 604 287
- US-A- 4 752 481
- US-A- 4 786 491
- US-A-43 791 69
- PATENT ABSTRACTS OF JAPAN, vol. 10, no. 94 (C-338)[2151], 11th April 1986;& JP-A-60 224 449 (KANEBOU SHIYOKUHIN K.K.) 08-11-1985
- WPIL FILE SUPPLIER, accession no. 85-273619 [44], Derwent Publications Ltd,London, GB; & JP-A-60 186 249 (LOTTE K.K.) 21-09-1985
- Specification sheet for Centromix CPS (trademark)

## Description

The present invention relates to chewing gums other than liquid center-filled gums yielding an extended flavor preception and better texture quality, and their method of manufacture.

To impart flavor to gum, the manufacturing process may utilize essential oils, synthetic flavors, or mixtures thereof including oils derived from plants and fruits, such as citrus oils, peppermint oil, spearmint oil, fruit essences, and the like. Unfortunately, flavor oils have a strong affinity for the chewing gum base causing the flavor oils to become inextricably bound within the gum base. Accordingly, the flavor oils do not completely release from the chewing gum base during chewing.

Enhanced flavor in chewing gum is obtained by sorbing the flavor on a hydrophilic colloid in conjunction with a surfactant is disclosed in US patent 3 930 026.

Chewing gums containing flavor oils which have reduced tendencies to bind with the chewing gum base would therefore constitute an advance in the art. Such chewing gums would be readily accepted by those skilled in the art and meet with commercial success.

It is therefore an object of the present invention to provide chewing gums containing flavor oils having improved flavor release characteristics.

This and other objects will become apparent to those skilled in the art in light of the following specification.

In accordance with the present invention, there is provided a chewing gum other than a liquid center-filled gum and a method of manufacturing a chewing gum comprising chewing gum base, flavor and flavor enhancing amount of emulsifier wherein the emulsifier has an HLB value in the range from 10 to 14.

The method comprises mixing the chewing gum base, flavor and emulsifier.

It has now been discovered that when emulsifiers of the type and quantity contemplated by the present invention are added to chewing gum ingredients, the chewing gum's flavor yield is prolonged. Other advantages contemplated by the present invention include a quicker flavor release. Also, when appropriate, the flavor quality of mint chewing gum is improved in that the "cooling" sensation associated with the mint flavor is increased. The chewing gum of the present invention also manifests improved texture quality. In particular, the gum is softer and maintains a larger cud size.

These and other advantages will become apparent in light of the following disclosure.

In accordance with the present invention, the flavor enhancing emulsifiers contemplated are mixed into the chewing gum mass at any time during the manufacturing process. But it is preferred that the emulsifier be thoroughly mixed into the molten base early in the gum manufacturing process. Another preferred method is to premix the emulsifier into the flavor.

Emulsifiers contemplated by the present invention include certain modified phosphatide/phospholipid combinations such as modified lecithin; fatty acid esters of polyglycerol and other sucrose fatty acid esters, polysorbates, or similar compounds. The contemplated emulsifiers will have HLB values greater than 10.

Phosphatide/phospholipid emulsifiers typically have HLB values below 7. However, they can be modified for example by acetylation or hydroxylation to increase the HLB value. Two or more emulsifiers may also be blended to produce an emulsifier combination having its own HLB. Such combinations may include emulsifiers with HLB values less than 7 so long as the HLB of the combination is above 10. Preferably, the emulsifier added to the chewing gum ingredients will be determined by the flavor and base composition of the particular chewing gum.

The Hydrophile-Lipophile Balance (HLB) number is an expression of the emulsifiers hydrophilic-lipophile balance, i.e. the balance of the size and strength of the hydrophilic and the lipophilic groups of the emulsifier. The HLB system which has been known to those skilled in the art since the late 1940's is useful in choosing an appropriate emulsifier. In accordance with one embodiment of the present invention, emulsifiers with HLB values greater than 10 are added to the chewing gum ingredients. The exact HLB value will depend on the flavor and base composition of the chewing gum. However, the emulsifiers used will have an HLB value greater than 10, and most preferably above 12.

In accordance with the present invention, a flavor enhancing amount of emulsifier is added. Preferably, the quantity of emulsifier added to the chewing gum ingredients will range from 0.1 weight percent to 0.7 weight percent of the chewing gum. The exact quantity of the emulsifier added will depend on the chewing gum's particular flavor and base composition. Most preferably, the quantity of emulsifier added will be from 0.2 weight percent to 0.3 weight percent of the chewing gum.

In general, a chewing gum composition comprises a water soluble bulk portion, a water insoluble chewable gum base portion, and, typically, water insoluble flavors. The water soluble portion dissipates with the portion of the flavor over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer, styrene butadiene rubber as well as natural latexes such as chicle. Resins include polyvinyl-acetate, estergums and terpene resins. Fats and oils may also be included in the gum including tallow, hydrogenated and partially hydrogenated vegetable oils and cocoa butter. Commonly employed waxes include paraffin, microcrystalline and natural waxes such as beeswax and carnauba and have melting points in the range of 43°C (110°F) to 83°C (180°F). The insoluble gum base constitutes from 5 to 95 percent of the gum. Preferably the insoluble gum base comprises from 10 to 50 weight percent of the gum and more preferably from 20 to 30 weight percent.

The gum base typically also includes a filler component. The filler component such as calcium carbonate, magnesium carbonate, talc, dicalcium phosphate and the like. The filler may constitute from 5 to 60 weight percent of the gum. Preferably, the filler comprises from 5 to 50 weight percent of the chewing gum base. The gum base typically also contains softeners, including glycerol monostearate and glycerol triacetate. Further, gum bases may also contain optional ingredients such as antioxidants, colors and emulsifiers.

The water soluble portion of chewing gum may further comprise softeners, sweeteners and combinations thereof. The softeners are added to the chewing gum in order to optimize chewability and mouthfeel of the gum. Softeners, also known in the art as plasticizers or plasticizing agents, generally constitute from 0.5 to 15 weight percent of the chewing gum. Softeners contemplated by the present invention include glycerin, lecithin and combinations thereof. Further, aqueous sweetener solutions such as those containing sorbitol, hydrogenated starch hydrolysates, corn syrup and combinations thereof may be used as softeners and binding agents in gum.

Chewing gum may also contain high intensity sweeteners. Such sweeteners are also contemplated by the present invention for addition to the chewing gum. These sweeteners include both sugar and sugarless components. Sugar sweeteners generally include saccharide containing components commonly known in the chewing gum art which comprise but are not limited to sucrose, dextrose, maltose, dextrin, dried invert sugar, fructose, levulose, galactose, corn syrup solids, and the like, alone or in any combination. Sugarless sweeteners include components with sweetening characteristics but are devoid of the commonly known sugars and comprise but are not limited to sugar alcohols such as sorbitol, mannitol, xylitol, hydrogenated starch hydrolysates, maltitol, alone or in any combination. Also contemplated for addition to the chewing gum are high intensity sweeteners such as aspartame, sucralose, acesulfame-K and saccharin.

Those skilled in the art will recognize that any combination of sugar and/or sugarless sweeteners may be incorporated into the chewing gum formula. Further, those skilled in the art will recognize a sweetener may be present in a chewing gum in whole or in part as a water soluble bulking agent. In addition, the softener may be combined with a sweetener such as an aqueous sweetener solution.

A flavor may be present in a chewing gum in an amount from 0.1 to 10 weight percent and preferably from 0.5 to 3.0 weight percent of the gum. Flavors contemplated by the present invention include any food acceptable liquid flavoring. The flavor may comprise essential oils, synthetic flavors, or mixtures thereof, including but not limited to oils derived from plants and fruits such as citrus oils, fruit essences, peppermint oil, spearmint oil, clove oil, oil of wintergreen, anise, and the like. Artificial flavoring components are also contemplated by the present invention. Those skilled in the art will recognize that the natural and artificial flavors may be combined in any manner. All such flavors and blends are contemplated by the present invention.

Additional ingredients such as colors and pharmaceutical agents may be added to the chewing gum.

In general, chewing gum is manufactured by sequentially adding the various chewing gum ingredients to any commercially available mixer known in the art. After the ingredients have been thoroughly mixed, the gum mass is discharged from the mixer and shaped into the desired forms such as by rolling into sheets and cutting into sticks, extuding into chunks, or casting into pellets.

Generally, the ingredients are mixed by first melting the gum base and adding it to the running mixer. The base may also be melted in the mixer itself. Color may also be also be added at this time. A softener such as glycerin may then be added next along with syrup and a portion of bulking agent. Further portions of the bulking agents may be added to the mixer. It should be understood, that in proper conditions, the emulsifiers of the present invention may be added at any time during the gum manufacturing process. They may also be added to the gum base at any time prior to gum manufacture, particularly during base manufacture.

The entire mixing procedure typically takes from 5 to 15 minutes, but longer mixing times may sometimes may be required. Those skilled in the art will recognize that variations to the above-described procedure may be employed. It is to be understood that an equivalent of changes and modifications of the embodiments described above are also contemplated by the present invention. The following examples are not to be construed as limitations upon the present invention, but are included merely as an illustration of various embodiments.

### EXAMPLE 1

The chewing gum was prepared by adding molten base to a sigma blade mixer, then adding corn syrup and glycerin to the running mixer. Dextrose and sugar were added gradually with flavor addition occurring with the last of the sugar. All other examples were prepared in a similar manner. Where emulsifiers were used, they were added to the molten base before the corn syrup and glycerin.

Chewing gum Sample 1 was prepared in accordance with the ingredients listed under "Sample 1" in Table 1.

Chewing gum Sample 2 was prepared in accordance with the ingredients listed under "Sample 2" in Table 1.

Chewing gum Sample 3 was prepared in accordance with the ingredients listed under "Sample 3" in Table 1.

In chewing tests comparing Sample 1 and Sample 2, Sample 2 was found to have a quicker flavor release and a slightly extended flavor duration.

In chewing tests comparing Sample 1 and Sample 3, Sample 3 was found to have an extended flavor duration as well as a greater flavor intensity.

**TABLE 1**

| | Sample 1 | Sample 2 | Sample 3 |
|---|---|---|---|
| Base | 20.67 | 20.67 | 20.67 |
| Sugar | 53.18 | 53.005 | 53.005 |
| Corn Syrup | 14.59 | 14.59 | 14.59 |
| Dextrose | 10.14 | 10.14 | 10.14 |
| Glycerin | 0.86 | 0.86 | 0.86 |
| Spearmint Oil | 0.56 | 0.56 | 0.56 |
| Santone 3-1-S (Trademark) (HLB 7)¹ | -- | 0.175 | -- |
| Santone 8-1-0 (Trademark) (HLB 13)² | | | 0.175 |
| | 1̅0̅0̅.̅0̅0̅ | 1̅0̅0̅.̅0̅0̅ | 1̅0̅0̅.̅0̅0̅ |
| Santone emulsifiers are fatty acid esters of polyglycerol. | | | |

| | | | |
|---|---|---|---|
| 1. 3-1-S is Triglycerol Monostearate | | | |
| 2. 8-1-O is Octaglycerol Monoleate | | | |

### EXAMPLE 2

Chewing gum Sample 4 was prepared in accordance with the ingredients listed under "Sample 4" in Table 2.

Chewing gum Sample 5 was prepared in accordance with the ingredients listed under "Sample 5" in Table 2.

In chewing tests Sample 4 was compared with Sample 5, Sample 5 was found to have longer lasting flavor yield as well as a greater maximum flavor duration and a slower flavor decline.

**TABLE 2**

| | Sample 4 | Sample 5 |
|---|---|---|
| Base | 19.30 | 19.30 |
| Sugar | 55.08 | 54.93 |
| Corn Syrup | 16.75 | 16.75 |
| Dextrose | 7.28 | 7.28 |
| Glycerin | 0.87 | 0.87 |
| Natural & Artificial Flavor | 0.72 | 0.72 |
| Santone 8-1-0 (Trademark) (HLB 13) | -- | 0.15 |
| | 1̅0̅0̅.̅0̅0̅ | 1̅0̅0̅.̅0̅0̅ |

### EXAMPLE 3

Chewing gum Sample 6 was prepared in accordance with the ingredients listed under Sample 6 in Table 3.

Chewing gum Sample 7 was prepared in accordance with the ingredients listed under Sample 7 in Table 3.

In chewing tests comparing Sample 6 and Sample 7, Sample 7 was found to have longer lasting flavor yield.

**TABLE 3**

| | Sample 6 | Sample 7 |
|---|---|---|
| Base | 19.30 | 19.30 |
| Sugar | 55.23 | 54.98 |
| Corn Syrup | 16.75 | 16.75 |
| Dextrose | 7.28 | 7.28 |
| Glycerin | 0.73 | 0.73 |
| Natural & Artificial Fruit Flavor | 0.71 | 0.71 |
| Centromix CPS¹ (Trademark)(HLB 12) | -- | 0.25 |
| | 1̅0̅0̅.̅0̅0̅ | 1̅0̅0̅.̅0̅0̅ |

| | | |
|---|---|---|
| 1. Centromix is a blend of lecithin and polysorbate 80. | | |

### EXAMPLE 4

Chewing gum Sample 8 was prepared in accordance with the ingredients listed under Sample 8 in Table 4.

Chewing gum Sample 9 was prepared in accordance with the ingredients listed under Sample 9 in Table 4.

Chewing gum Sample 10 was prepared in accordance with the Ingredients listed under Sample 10 in Table 4.

In chewing tests Samples 8, 9 and Sample 10 were compared. Sample 9 was found to have a slightly reduced duration of flavor yield, and undesirable flavor attributes and mouth coating. Accordingly, Sample 9 is believed to have an excessive amount of this type of emulsifier for the particular chewing gum composition. Sample 10 had the quickest flavor release, the broadest flavor peak and greatest flavor intensity as well as the greatest flavor duration and the best flavor.

**TABLE 4**

| | Sample 8 | Sample 9 | Sample 10 |
|---|---|---|---|
| Base | 20.18 | 20.18 | 20.18 |
| Sugar | 54.44 | 54.14 | 54.14 |
| Corn Syrup | 13.32 | 13.32 | 13.32 |
| Dextrose | 9.90 | 9.90 | 9.90 |
| Glycerin | 1.29 | 1.29 | 1.29 |
| Peppermint Oil | 0.87 | 0.87 | 0.87 |
| Santone 3-1-S (Trademark) (HLB 7) | -- | 0.30 | -- |
| Santone 8-1-O (Trademark) (HLB 13) | -- | -- | 0.30 |
| | 1̅0̅0̅.̅0̅0̅ | 1̅0̅0̅.̅0̅0̅ | 1̅0̅0̅.̅0̅0̅ |

## Claims

1. A chewing gum, other than a liquid center-filled gum, comprising chewing gum base, flavor and flavor enhancing amount of emulsifier wherein the emulsifier has an HLB value in the range from 10 to 14.

2. A chewing gum as claimed in claim 1 wherein said emulsifier comprises a sucrose fatty acid ester.

3. A chewing gum as claimed in claim 1 wherein said emulsifier comprises polysorbate.

4. A chewing gum as claimed in claim 1 wherein said emulsifier comprises a modified phosphatide/phospholipid combination.

5. A chewing gum as claimed in claim 1 wherein said emulsifier comprises a fatty acid ester of polyglycerol.

6. A chewing gum as claimed in claim 1 wherein said emulsifier comprises modified lecithin.

7. A chewing gum as claimed in any preceding claim wherein said emulsifier comprises a combination of emulsifiers.

8. A chewing gum as claimed in any preceding claim comprising from 0.1 wt.% to 0.7 wt.% emulsifier.

9. A method of manufacturing chewing gum, other than a liquid center-filled gum, comprising the following steps:
providing chewing gum base, flavor and
flavor enhancing amount of emulsifier having an HLB value in the range of from 10 to 14; and
mixing the chewing gum base, flavor and emulsifier.

10. A method as claimed in claim 9 wherein the emulsifier comprises from 0.1 wt.% to 0.7 wt.% of the chewing gum.

11. A chewing gum as claimed in claim 1, 7 or 8 wherein the emulsifier is selected from the group consisting of sucrose fatty acid esters; polysorbate; modified phosphatides; modified phospholipids; fatty acid esters of polyglycerol; and mixtures thereof.

12. A method as claimed in claim 9, or 10 wherein the emulsifier is selected from the grop consisting of sucrose fatty acid esters; polysorbates; modified phosphatides; modified phospholipids; fatty acids esters of polyglycerol; and mixtures thereof.

## Patentansprüche

1. Kaugummi, das von einem im Innern mit einer Flüssigkeit gefüllten Kaugummi verschieden ist, das umfaßt eine Kaugummi-Grundmasse (-Basis), einen Geschmacksbildner (Geschmack verleihenden Stoff) und eine den Geschmack verbessernde Menge eines Emulgiermittels, das einen HLB-Wert in dem Bereich von 10 bis 14 hat.

2. Kaugummi nach Anspruch 1, worin das Emulgiermittel einen Saccharosefettsäureester umfaßt.

3. Kaugummi nach Anspruch 1, worin das Emulgiermittel Polysorbat umfaßt.

4. Kaugummi nach Anspruch 1, worin das Emulgiermittel eine modifizierte Phosphatid/Phospholipid-Kombination umfaßt.

5. Kaugummi nach Anspruch 1, worin das Emulgiermittel einen Polyglycerinfettsäureester umfaßt.

6. Kaugummi nach Anspruch 1, worin das Emulgiermittel modifiziertes Lecithin umfaßt.

7. Kaugummi nach irgendeinem der vorhergehenden Ansprüche, worin das Emulgiermittel eine Kombination von Emulgiermitteln umfaßt.

8. Kaugummi nach irgendeinem der vorhergehenden Ansprüche, das 0,1 bis 0,7 Gew.-% Emulgiermittel enthält.

9. Verfahren zur Herstellung eines Kaugummis, der von einem im Innern mit einer Flüssigkeit gefüllten Kaugummi verschieden ist, das die folgenden Stufen umfaßt: Bereitstellung einer Kaugummi-Grundmasse (-Basis), eines Geschmacksbildners (Geschmack verleihenden Stoffes) und einer den Geschmack verbessernden Menge eines Emulgiermittels mit einem HLB-Wert in dem Bereich von 10 bis 14; und
Mischen der Kaugummi-Grundmasse mit dem Geschmacksbildner und dem Emulgiermittel.

10. Verfahren nach Anspruch 9, worin das Emulgiermittel 0,1 bis 0,7 Gew.-% des Kaugummis ausmacht.

11. Kaugummi nach Anspruch 1, 7 oder 8, worin das Emulgiermittel ausgewählt wird aus der Gruppe, die besteht aus Saccharosefettsäureestern; Polysorbaten; modifizierten Phosphatiden; modifizierten Phospholipiden; Polyglycerinfettsäureestern und Mischungen davon.

12. Verfahren nach Anspruch 9 oder 10, worin das Emulgiermittel ausgewählt wird aus der Gruppe, die besteht aus Saccharosefettsäureestern; Polysorbaten; modifizierten Phosphatiden, modifizierten Phospholipiden; Polyglycerinfettsäureestern und Mischungen davon.

## Revendications

1. Gomme à mâcher, autre qu'une gomme dont la partie centrale est remplie d'un liquide, comprenant une base de gomme à mâcher, un arôme et une quantité d'un émulsifiant renforçant le goût, dans laquelle l'émulsifiant a une valeur de HLB comprise entre 10 et 14.

2. Gomme à mâcher telle que revendiquée dans la revendication 1, dans laquelle ledit émulsifiant est constitué d'un ester d'acide gras de saccharose.

3. Gomme à mâcher telle que revendiquée dans la revendication 1, dans laquelle ledit émulsifiant est constitué d'un polysorbate.

4. Gomme à mâcher telle que revendiquée dans la revendication 1, dans laquelle ledit émulsifiant est constitué d'une combinaison d'un phosphatide modifié et d'un phospholipide modifié.

5. Gomme à mâcher telle que revendiquée dans la revendication 1, dans laquelle ledit émulsifiant est constitué d'un ester d'acide gras de polyglycérol.

6. Gomme à mâcher telle que revendiquée dans la revendication 1, dans laquelle ledit émulsifiant est constitué de lécithine modifiée.

7. Gomme à mâcher selon l'une quelconque des revendications précédentes, dans laquelle ledit émulsifiant est constitué d'une combinaison d'émulsifiants.

8. Gomme à mâcher selon l'une quelconque des revendications précédentes, comprenant de 0,1 % en poids à 0,7 % en poids d'émulsifiant.

9. Procédé de fabrication d'une gomme à mâcher, autre qu'une gomme dont la partie centrale est remplie d'un liquide, comprenant les étapes suivantes :
fournir une base de gomme à mâcher, un arôme et une quantité d'un émulsifiant renforçant le goût, ayant une valeur de HLB comprise entre 10 et 14 ; et
mélanger la base de gomme à mâcher, l'arôme et l'émulsifiant.

10. Procédé tel que revendiqué dans la revendication 9, où l'émulsifiant constitue de 0,1 % en poids à 0,7 % en poids de la gomme à mâcher.

11. Gomme à mâcher telle que revendiquée dans la revendication 1, 7 ou 8, l'émulsifiant étant choisi dans l'ensemble constitué par des esters d'acides gras de saccharose, un polysorbate, des phosphatides modifiés, des phospholipides modifiés, des esters d'acides gras de polyglycérol, et des mélanges de ceux-ci.

12. Procédé tel que revendiqué dans la revendication 9 ou 10, l'émulsifiant étant choisi dans l ensemble constitué par des esters d'acides gras de saccharose, des polysorbates, des phosphatides modifiés, des phospholipides modifiés, des esters d'acides gras de polyglycérol, et des mélanges de ceux-ci.
